# EUROPÄISCHE PATENTANMELDUNG

(11) **EP 1 080 767 A2**
(43) Veröffentlichungstag der Anmeldung: **07.03.2001**
(21) Anmeldenummer: 00118411.8
(22) Anmeldetag: 24.08.2000
(51) Int. Cl.: B01D 3/36, B01D 3/40

(54) **Verfahren zur Aufarbeitung einer salzhaltigen Säurelösung und Anlage zur Durchführung des Verfahrens**

(30) Priorität: 26.08.1999 DE 19940573
(71) Anmelder: QVF Engineering GmbH, 55122 Mainz (DE)
(72) Erfinder: Dichtl, Gottfried, 55268 Nieder-Olm (DE); Sassenberg, Manfred, 55127 Mainz (DE); Hessenius, Theo, Dr., 55270 Essenheim (DE); Walter, Ulrich, 65510 Idstein (DE)
(74) Vertreter: Andrae, Steffen, Dr.

(57) **Zusammenfassung**

Verfahren zur Aufarbeitung einer wäßrigen, salzhaltigen Säurelösung, die wenigstens eine Säure enthält, die mit Wasser wenigstens ein Azeotrop bildet, unter Gewinnung einer salzfreien Säurelösung und einer Salzlösung mit vermindertem Säuregehalt, bei dem man die salzhaltige Säurelösung auf eine erste Kolonne (K1) aufgibt, in der die salzhaltige Säurelösung unter Gewinnung von Wasser als Kopfprodukt, eines höhersiedenden dampfförmigen Wasser-Säure-Gemischs sowie einer Sumpffraktion in Form einer aufkonzentrierten säurehaltigen Salzlösung aufgetrennt wird, bei dem man zur weiteren Abtrennung von Säure aus der aufkonzentrierten Salzlösung die Sumpffraktion aus der ersten Kolonne (K1) auf eine nachgeschaltete Abtriebskolonne (K2) aufgibt, in der die Sumpffraktion unter Energieeintrag aufgetrennt wird in (i) eine aus dem Kopfbereich der Abtriebskolonne (K2) dampfförmig abgezogene Säurefraktion und (ii) eine aus dem Sumpf der Abtriebskolonne als Flüssigkeit abgezogene vollständig oder weitgehend säurefreie konzentrierte Salzlösung.

## Beschreibung

Die Erfindung betrifft ein Verfahren zur Aufarbeitung einer salzhaltigen Säurelösung, die eine oder mehrere Säuren enthält, die mit Wasser wenigstens ein Azeotrop bilden, um die Säure möglichst vollständig als Wertstoff zurückzugewinnen und die weiteren Bestandteile der ursprünglichen salzhaltigen Säurelösung, wie Wasser und Salz, in einer Form zu gewinnen, in der diese eine für ihre Entsorgung oder auch Weiterverwendung ausreichende Reinheit aufweisen.

In der chemischen Industrie fallen bei verschiedenen Prozessen, beispielsweise bei solchen der chemischen Grundstoffindustrie, der Herstellung von Schwerchemikalien, in der Sprengstoffindustrie oder der Düngemittelindustrie, als Nebenprodukte verdünnte wäßrige Säurelösungen an, insbesondere Lösungen von einzelnen Mineralsäuren oder Gemischen von Mineralsäuren, die zusätzlich beträchtliche Mengen an Salzen enthalten können. Es besteht im Hinblick auf derartige Nebenprodukte grundsätzlich der Wunsch, verdünnte wäßrige Säurelösungen so auf zuarbeiten, daß die Säurekomponente in einer für eine Verwendung in industriellen chemischen Prozessen erforderlichen Reinheit und Konzentration möglichst vollständig wiedergewonnen wird, da die Säuren einerseits Wertstoffe darstellen und andererseits in verdünnter Form Entsorgungsprobleme bereiten.

Bilden die in den verdünnten wäßrigen Säurelösung enthaltenen Säuren mit Wasser Azeotrope, können sie durch einfache Destillation bzw. Rektifikation nicht über eine der azeotropen Mischung entsprechende Konzentration aufkonzentriert werden. Um Säuren über das sogenannte Maximumazeotrop hinaus mittels Destillation bzw. Rektifikation aufkonzentrieren zu können, muß man auf besondere zusätzliche Maßnahmen zurückgreifen, die eine Verschiebung bzw. gänzliche Unterdrückung des azeotropen Punkts bewirken. Man greift zu diesem Zwecke auf die sogenannte Extraktivrektifikation zurück, bei der während der Rektifikation bzw. Destillation ein Zusatzstoff, der in der Fachliteratur und in der vorliegenden Anmeldung auch als "Extraktionsmittel" bezeichnet wird, zugesetzt wird und der es ermöglicht, aus einer wäßrigen Lösung einer azeotropbildenden Säure die Säure in hochreiner und hochkonzentrierter Form auf destillativem Wege zu gewinnen.

Beispielsweise ist es bekannt, für die Gewinnung einer hochreinen Salpetersäure Schwefelsäure als derartigen Zusatzstoff (Extraktionsmittel) zu verwenden. Es ist jedoch auch bekannt, daß als Extraktionsmittel auch Salze dienen können, wenn diese während der Destillation bzw. Rektifikation in ausreichender Konzentration vorhanden sind (vergl. beispielsweise die Patentanmeldung 199 20 741.0 der Anmelderin). Der bei der Verwendung von Salzen als Extraktionsmittel erhaltene sogenannte "Salzeffekt° ist in der einschlägigen Literatur ausführlich beschrieben (Lit.: Vaporliquid equilibrium data-salt effect, Shuzo Ohe, Kodansha/Elsevier 1991; Anil Kumar, A simple model for predicting the effect of electrolytes on the vapor-liquid equilibrium data of solvent mixtures, Separation Science and Technology, 28(5), 1993, S. 1203-1210; Cheng-Long Lin, Liang-Sun Lee, Hsieng-Cheng Tseng: Thermodynamic behavior of electrolyte solutions, Fluid Phase Equilibria, 90 (1993), S. 81-98).

Verwendet man ein flüssiges Extraktionsmittel wie z.B. Schwefelsäure, kann diese durch Rückkonzentration aufgearbeitet und als frisches Extraktionsmittel in die Extraktivrektifikation zurückgeführt werden, beispielsweise so, wie in der älteren Patentanmeldung 199 20 741.0 der Anmelderin in verschiedenen Ausgestaltungen beschrieben wird. Verwendet man bei einem Extraktivrektifikationsverfahren an

Stelle von z.B. Schwefelsäure eine Salzlösung, ist zu berücksichtigen, daß dem Prozeß durch die Löslichkeitseigenschaften des Salzes gewisse zusätzliche Grenzen gezogen werden, da eine Abscheidung bzw. Ausfällung von festem Salz in der Anlage normalerweise unerwünscht ist, so daß zur Vermeidung derartiger Erscheinungen gegebenenfalls besondere Maßnahmen erforderlich sind.

Bei den als Nebenprodukten industrieller Prozesse anfallenden salzhaltigen wäßrigen Säurelösungen, wie sie im Rahmen der vorliegenden Erfindung aufgearbeitet werden sollen, weist die auf zuarbeitende Säure häufig eine unterazeotrope Zusammensetzung auf, d.h. eine Säurekonzentration, die unterhalb des azeotropen Punkts liegt. Ferner ist die Konzentration der Salze in der wäßrigen Säurelösung häufig zu gering, um eine nennenswerte Verschiebung des Azeotrope im Sinne des oben erwähnten Salzeffekts zu erreichen. Versucht man, eine derartige unterazeotrope salzhaltige wäßrige Säurelösung durch Destillation bzw. Rektifikation aufzutrennen, kann man aus dieser Wasser abdestillieren, das am Kopf einer entsprechenden Rektifikationskolonne in hoher Reinheit abgezogen werden kann. Vorausgesetzt, man verwendet eine Kolonne mit einer ausreichenden Anzahl an Trennstufen, erhält man bei einer unterazeotropen salzfreien Ausgangslösung im Sumpf der Kolonne eine Säure annähernd azeotroper Zusammensetzung. Enthält die aufzuarbeitende Säurelösung Salze, die in der Regel nicht-flüchtig und nicht-zersetzlich sind, reichern sich diese im Sumpf der Rektifikationskolonne an. Die im Ausgangsprodukt enthaltene Säure, die einen Wertstoff darstellt und in der Regel in möglichst hochkonzentrierter Form wiedergewonnen werden soll, trennt man in einem solchen Falle während der Rektifikation dadurch ab, daß man ein Wasser-Säure-Gemisch seitlich direkt über dem Sumpf abzieht.

Durch die Abdestillation des Wassers sowie das Abziehen eines dampfförmigen Wasser-Säure-Gemischs kommt es, verglichen mit der eingesetzten wäßrigen salzhaltigen Säurelösung, im Sumpf der Rektifikationskolonne zu einer starken Aufkonzentrierung des Salzes in der Lösung. Durch diese Aufkonzentrierung des Salzes kommt es aufgrund des oben erläuterten Salzeffekts auch zu einer Verschiebung des Maximumazeotrops in Richtung höherer Säurekonzentrationen in der Dampfphase über dem Sumpf. Die Salzkonzentration im Sumpf der Rektifikationskolonne kann dabei jedoch in der Regel aus verschiedenen Gründen, beispielsweise aufgrund einer maximalen Sättigungskonzentration, die nicht überschritten werden darf, nicht soweit ansteigen, daß eine völlige Abdestillation des Säureanteils aus dem Sumpf möglich wird.

Bei einer einstufigen Aufarbeitung einer salzhaltigen wäßrigen Säurelösung in einer einzigen Rektifikationskolonne, wie sie eben beschrieben wurde und wie sie für den Stand der Technik charakteristisch ist, wird daher aus dem Sumpf der Rektifikationskolonne ein Salzlösungs-Ausschleusstrom erhalten, der noch einen relativ hohen Säureanteil im Bereich von etwa 8 bis 25 Gew.-% (je nach Zusammensetzung der Ausgangsmischung und Art der Säure(n) bzw. der Verfahrensführung) liegt. Eine an sich wünschenswerte vollständige Auftrennung einer wäßrigen salzhaltigen Säurelösung in eine ganz oder wenigstens weitestgehend säurefreie wäßrige Salzlösung, Wasser und ein möglichst konzentriertes Säureprodukt ist somit bei diesem Verfahren nicht möglich.

Es ist Aufgabe der vorliegenden Erfindung, ein Verfahren zur Aufarbeitung einer wäßrigen, salzhaltigen Säurelösung, die wenigstens eine Säure enthält, die mit Wasser wenigstens ein Azeotrop bildet, unter Gewinnung einer salzfreien Säurelösung und einer Salzlösung mit vermindertem Säuregehalt, bei dem man die salzhaltige Säurelösung auf eine Kolonne aufgibt, in der die salzhaltige Säurelösung unter Gewinnung von Wasser als Kopfprodukt, eines höhersiedenden dampfförmigen Wasser-Säure-Gemischs sowie einer Sumpffraktion in Form einer aufkonzentrierten säurehaltigen Salzlösung aufgetrennt wird, so weiterzubilden, daß eine weitestgehend bzw. vollständige Rückgewinnung der Säure (n) ermöglicht wird und der Salzgehalt des Ausgangsprodukts in Form einer wäßrigen Salzlösung aus dem Verfahren ausgeschleust werden kann, die gar keinen oder nur einen sehr stark verminderten Restsäuregehalt aufweist und daher einfach aufzuarbeiten bzw. wiederzuverwenden oder zu entsorgen ist.

Diese Aufgabe wird bei einem Verfahren der genannten Art dadurch gelöst, daß man gemäß dem Kennzeichen von Anspruch 1 zur weiteren Abtrennung von Säure aus der aufkonzentrierten Salzlösung, die als Sumpffraktion aus der ersten Kolonne erhalten wird, diese Sumpffraktion auf eine nachgeschaltete Abtriebskolonne aufgibt, in der die Sumpffraktion unter Energieeintrag aufgetrennt wird in (i) eine aus dem Kopfbereich der Abtriebskolonne dampfförmig abgezogene Säurefraktion und (ii) eine aus dem Sumpf der Abtriebskolonne als Flüssigkeit abgezogene vollständige oder weitgehend säurefreie konzentrierte Salzlösung.

Vorteilhafte Ausgestaltungen eines derartigen Verfahrens weisen einige oder mehrere der in den Unteransprüchen 2 bis 10 aufgeführten Merkmale auf.

Eine Anlage zur Durchführung des erfindungsgemäßen Verfahrens weist die in Anspruch 11 wiedergegebene Kombination von Anlagenmerkmalen und Führung von Produktströmen auf. Bevorzugte Ausgestaltungen einer Anlage gemäß Anspruch 11 sind in den Unteransprüchen 12 bis 14 wiedergegeben.

Durch das Zuschalten einer zweiten Abtriebskolonne K2 kann die aufkonzentrierte Salzlösung aus dem Sumpf der ersten Kolonne K1 weitgehend oder komplett von Säureanteilen befreit werden, wobei die entfernte Säure als Säure-Wasser-Gemisch über Kopf aus der Abtriebskolonne K2 ausgeschleust wird.

Nachfolgend wird die Erfindung anhand verschiedener Ausführungsformen unter Bezugnahme auf die Figuren näher erläutert.

In den Figuren zeigen:
- Fig. 1: ein Fließdiagramm für ein Verfahren zur Aufarbeitung einer wäßrigen salzhaltigen Säurelösung unter Gewinnung einer nicht oder nur gering säurebelasteten Salzlösung und Rückgewinnung von Säuren unter Verwendung einer ersten herkömmlichen Rektifikationskolonne und einer zusätzlichen Abtriebskolonne, wobei der Energieeintrag in die Abtriebskolonne K2 mit Strippdampf erfolgt;
- Fig. 2: ein Fig. 1 entsprechendes Fließdiagramm, das sich vom letztgenannten nur dadurch unterscheidet, daß der Energieeintrag in die Abtriebskolonne K2 mittels eines indirekt beheizten Verdampfers W2 erfolgt;
- Fig. 3: ein Fließdiagramm entsprechend dem Fließdiagramm von Fig. 1, wobei jedoch die Abtriebskolonne nicht als eine getrennte zweite Kolonne ausgeführt ist, sondern den unteren Abschnitt einer geteilten Rektifikationskolonne bildet, wobei der Energieeintrag mit Strippdampf erfolgt; und
- Fig. 4: ein Fließdiagramm zur Durchführung des Verfahrens entsprechend Fig. 3, wobei in diesem Falle der Energieeintrag in den als zweite Abtriebskolonne arbeitenden Teil der geteilten Kolonne über einen indirekt beheizten Verdampfer W2 erfolgt.

In den Figuren spiegelt die Kolonne bzw. der Kolonnenabschnitt K1 die herkömmliche Verfahrensführung zur Aufarbeitung einer wäßrigen salzhaltigen Säurelösung wieder. In dieser ersten Kolonne bzw. dem ersten Kolonnenabschnitt K1 wird das Ausgangs-Säure-Gemisch in 3 Stoffströme aufgetrennt, d.h. in (i) eine am Kopf abgezogene leichter siedende Fraktion (z.B. Wasser); (ii) eine schwerer-siedende dampfförmige Fraktion (aufkonzentriertes Wasser-Säure-Gemisch), die seitlich vom Abtriebsteil vorzugsweise unmittelbar am Sumpf abgezogen wird; sowie (iii) eine flüssige Salzlösung, die noch wesentliche Anteile der schwerer siedenden Fraktion (des aufkonzentrierten Wasser-Säure-Gemisches) enthält und die aus dem Sumpf der Kolonne K1 ausgeschleust wird.

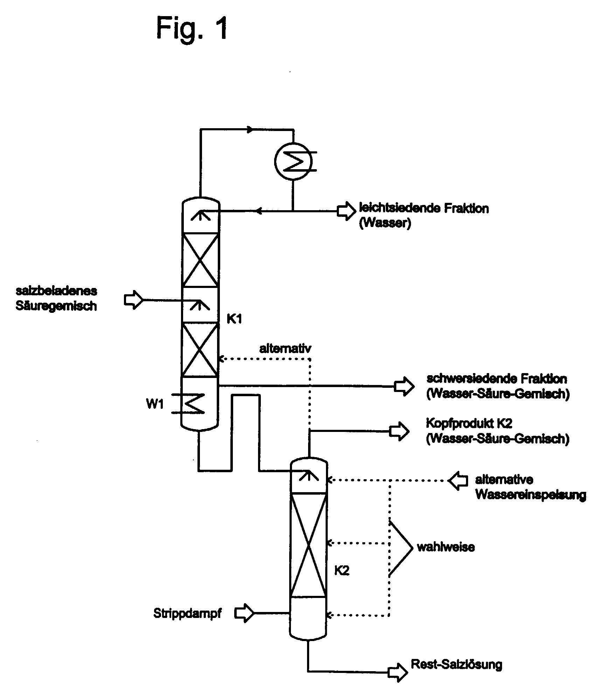

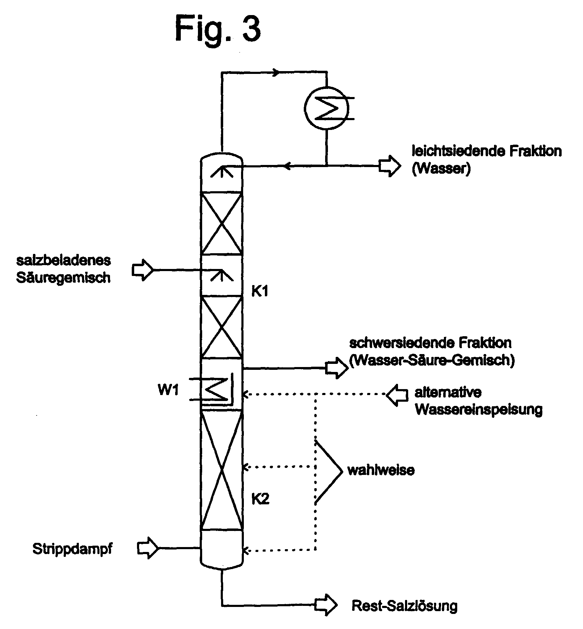

Erfindungsgemäß wird nunmehr die als Sumpffraktion der ersten Kolonne bzw. des ersten Kolonnenabschnitts K1 erhaltene säurehaltige flüssige Salzlösung auf den Kopf einer nachgeschalteten Abtriebskolonne bzw. eines Kolonnenabschnitts K2 aufgegeben, wo es zu einer weiteren Auftrennung des Sumpfprodukts aus der Kolonne K1 kommt. Bei der weiteren Auftrennung der Sumpffraktion in der Abtriebskolonne K2 ist dafür Sorge zu tragen, daß einerseits eine möglichst vollständige Abtrennung der Säure erfolgt, andererseits die Löslichkeitsgrenze des Salzes in der Salzlösung nicht überschritten wird. Um eine möglichst vollständige Abtrennung der Säure in der Abtriebskolonne K2 zu erhalten, muß in diese Energie eintragen werden. Das kann wahlweise erfolgen durch (i) Einspeisung von Strippdampf (Wasserdampf) in den Sumpf der Abtriebskolonne K2 (Figuren 1 und 3) oder (ii) durch Verwendung eines indirekt beheizten Verdampfers W2 im Sumpf der Abtriebskolonne K2. Zusätzlich kann in jedem der Fälle in die Abtriebskolonne K2 zusätzlich seitlich an geeigneten Stellen Wasser eingespeist werden kann.

Selbstverständlich ist es auch möglich, den Energieeintrag durch eine Kombination der beiden geschilderten Maßnahmen, d.h. durch eine Verwendung von sowohl Strippdampf als auch eines indirekt beheizten Verdampfers W2, zu erzielen. Durch die geschilderten Maßnahmen kann in der Kolonne K2 der Säureanteil aus der auf die Abtriebskolonne aufgegebenen aufkonzentrierten säurehaltigen Salzlösung aus dem Sumpf von K1 im wesentlichen vollständig ausgetrieben werden. Damit erhält man im Sumpf der Abtriebskolonne K2 eine wesentlich besser weiterzuverarbeitende bzw. besser zu entsorgende Salzlösung.

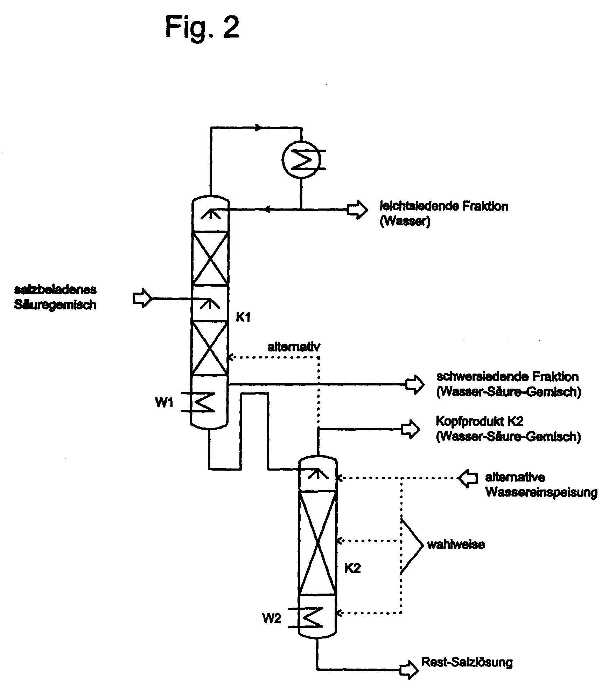

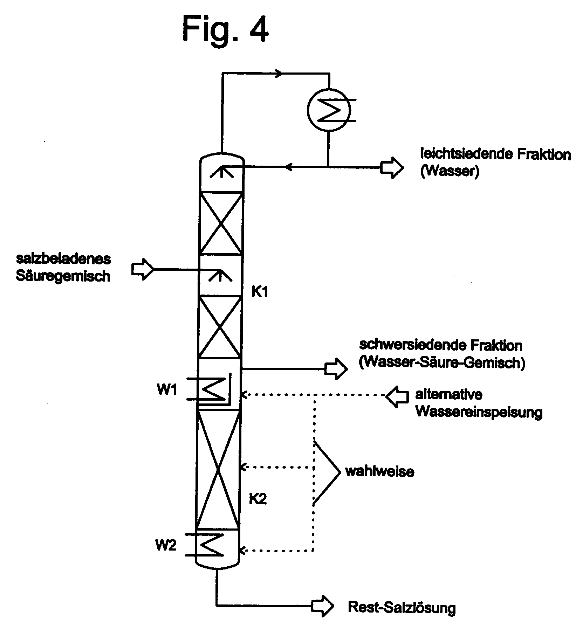

Zugleich wird am Kopf der Abtriebskolonne ein weiteres salzfreies dampfförmiges Säure-Wasser-Gemisch erhalten. Dieses Gemisch kann mit der dampfförmigen schwerer siedenden Wasser-Säure-Fraktion der Kolonne K1 (vergl. Fig. 3 bzw. 4) vereinigt und aus dem Verfahren zur Weiterverarbeitung ausgeschleust werden. Das Kopfprodukt der Abtriebskolonne K2 kann dazu auch in die Kolonne K1 zurückgeführt werden, es kann aber selbstverständlich auch separat ausgeschleust werden (vergl. Fig. 1 und 2).

Wie in den Figuren 1 und 2 bzw. 3 und 4 gezeigt ist, kann die Abtriebskolonne K2 als separate Seitenkolonne ausgeführt werden, oder aber auch als unterer Kolonnenabschnitt K2 einer einheitlichen Kolonne unterhalb des Kolonnenabschnitts K1, wenn man einen indirekt beheizten Verdampfer W1 entsprechend in die Gesamtkolonne integriert und für den Sumpf der Kolonne K1 entsprechende Einbauten vorsieht.

Bei dem erfindungsgemäßen Verfahren wird insbesondere bei Azeotrope bildenden Säuregemischen gegenüber der herkömmlichen Arbeitsweise eine erhebliche Verbesserung erzielt.

Durch die Einengung der Salzlösung (die Salzkonzentration steigt sprunghaft) im Sumpf der Kolonne K1 kommt es zu einer Verschiebung des azeotropen Punkts des Säure-Wasser-Gemischs in Richtung einer erniedrigten Säurekonzentration im Sumpf. Wenn man eine genügend große Anzahl an Trennstufen im Abtriebsteil der Kolonne K1 vorsieht, kann im Sumpf der Kolonne K1 eine Salzlösung erhalten werden, in der die Säure als überazeotrope Säure vorliegt. Bei einer derartigen Salzlösung agiert somit nicht mehr Wasser, sondern die Säure als leichter-flüchtige Komponente.

In der nachgeschalteten Abtriebskolonne K2 kann die Säure aus der aufkonzentrierten Salzlösung daher bis auf eine nahe dem in dieser Salzlösung geltenden verschobenen azeotropen Punkt in relativ konzentrierter Form entfernt werden. Ist die Salzkonzentration so hoch, daß der azeotrope Punkt völlig unterdrückt wird, ist die Restsalzlösung bei einer ausreichenden Trennstufenzahl der Abtriebskolonne K2 nahezu säurefrei.

Ist in einem konkreten Fall der Wasseranteil im dampfförmigen Kopfprodukt der Abtriebskolonne K2 relativ hoch und soll im Hinblick auf eine beabsichtigte nachgeschaltete Aufarbeitung das gesamte ausgeschleuste dampfförmige Säure-Wasser-Gemisch (d.h. die Gesamtheit der Ströme aus dem Seitenabzug der Kolonne K1 und dem Kopfprodukt der Abtriebskolonne K2) einen möglichst geringen Wasseranteil aufweisen, ist es vorteilhaft, den Kopfproduktstrom der Abtriebskolonne K2 in die Kolonne K1 zurückzuspeisen, und zwar an einem Ort oberhalb der seitlichen Entnahme der schwerer-siedenden Fraktion aus der Kolonne K1. Der Kopfproduktstrom der Abtriebskolonne K2 enthält zum Beispiel dann einen erhöhten Wasseranteil, wenn der azeotrope Punkt bei dem aus dem Sumpf der Kolonne K1 auf die Abtriebskolonne K2 aufgegebenen flüssigen Gemisch wegen einer zu geringen Löslichkeit des vorhandenen Salzes sowie gegebenenfalls anderer vorhandener Verunreinigungen nicht überschritten werden kann. In diesen Fällen kann durch Zufuhr von Strippdampf in die Abtriebskolonne K2 trotzdem der größte Teil der Säure ausgetrieben werden, wobei allerdings der Wasseranteil im Kopfprodukt der Abtriebskolonne K2 relativ hoch wird.

Es kann ferner in bestimmten Fällen, und zwar in Abhängigkeit von der Art der Säure(n) im Ausgangsprodukt, der Art und Menge vorhandener Verunreinigungen sowie der Konzentrationen der einzelnen Komponenten zweckmäßig sein, eine Teilrückführung der Salzlösung aus dem Sumpf der Abtriebskolonne K2 in den Kopfbereich dieser Abtriebskolonne K2 vorzusehen. Die aus dem Sumpf der Abtriebskolonne K2 zurückgeführte hochkonzentrierte Salzlösung kann dabei als Extraktionsmittel wirken und die Gewinnung eines Kopfprodukts mit höherem Säureanteil ermöglichen. An Stelle der genannten teilweisen Rückführung der Salzlösung aus dem Sumpf der Abtriebskolonne K2 oder zusätzlich dazu kann ferner auch noch externes Salz als Extraktionsmittel in Form einer Lösung einer geeigneten Konzentration in die Abtriebskolonne eingespeist werden, um aufgrund des Salzeffekts den azeotropen Punkt des Säure-Wasser-Gemischs in der Kolonne K2 zusätzlich zu verschieben.

Ob die Energiezufuhr in die Abtriebskolonne K2 nur mit Strippdampf oder durch indirekte Beheizung des Verdampfers W2 oder als Kombination beider Maßnahmen erfolgt, wird jeweils unter Berücksichtigung verschiedener Ausgangsrandbedingungen, wie der Art der Säure(n) im Gemisch, der Menge und Art von Verunreinigungen, den Konzentrationen der einzelnen Komponenten, gewählt. Ferner kann es vorteilhaft sein, zum Beispiel zur Gewährleistung der Löslichkeit der Salze und Verunreinigungen in der wäßrigen Phase eine Einspeisung von zusätzlichem Wasser in die Abtriebskolonne K2 vorzusehen. Das Wasser kann in flüssiger Form an geeigneten Stellen, zum Beispiel seitlich in die Abtriebskolonne K2, eingespeist werden, was in den Figuren durch die mit punktierten Linien dargestellten Zuleitungen gezeigt ist.

Wird die Abtriebskolonne K2 als seitlich angeordnete eigene Kolonne ausgeführt, kann der am Kopf austretende säurehaltige Dampf direkt abgezogen und beispielsweise zusammen mit dem Seitenabzug der Kolonne K1 einer Hochkonzentrierstufe zugeführt werden.

Zur weiteren Beeinflussung des Verfahrens kann der Druck in den Kolonnen K1 und/oder K2 variiert werden, wobei er unterschiedlich gewählt werden kann, wenn dadurch der Trenneffekt optimiert wird. Für die indirekte Beheizung der Kolonne K1 sowie für die indirekte Beheizung der Kolonne K2, wenn für diese eine derartige Form des Energieeintrags gewünscht wird, wird vorzugsweise ein liegender Verdampfer W1 bzw. W2 verwendet, der indirekt beheizt wird und eine besondere bevorzugte Ausgestaltung aufweist, indem er in seinem Bodenbereich quer zur Fließrichtung der Lösung Wehre aufweist, die ein kaskadenartiges Kammersystem von einzelnen Destillationsblasen bilden, wodurch zusätzlich Trennstufen geschaffen werden.

Das erfindungsgemäße Verfahren ermöglicht es in seinen verschiedenen Ausgestaltungen, die Rückgewinnung der Säure aus dem Ausgangsprodukt zu vervollständigen und zusätzliche Säure als Wertstoff zu gewinnen, sowie das Salz in der Ausgangslösung in Form einer weitgehend oder vollständig von Säure befreiten wäßrigen, aufkonzentrierten Salzlösung zu erhalten.

Eine derartige Salzlösung kann sehr viel einfacher weiterverarbeitet oder entsorgt werden. So kann sie beispielsweise dann, wenn das Salz einen Wertstoff darstellt, mit relativ geringem Energieaufwand zur Salzgewinnung genutzt werden, sie kann aber auch beispielsweise im Falle einer Extraktivrektifikation unter Verwendung einer Salzlösung als Haupt-Extraktionsmittel in ein Extraktivrektifikationsverfahren zurückgeführt werden. Auch die Entsorgung ist einfacher, wenn die Lösung keine Säureanteile enthält.

Nachfolgend wird die Erfindung anhand eines Ausführungsbeispiels im Vergleich mit einem herkömmlichen Verfahren näher erläutert.

### Beispiel

Das Beispiel betrifft die Trennung eines Ausgangsgemischs aus Wasser, Salpetersäure und Ammoniumnitrat.

Bei der Trennung eines derartigen Gemischs, das beispielsweise 54 Gew.-% Wasser, 43 Gew.-% Salpetersäure und 3 Gew.-% Ammoniumnitrat enthält, werden nach dem herkömmlichen Verfahren unter Verwendung nur einer Rektifikationskolonne (K1) typischerweise drei Grundfraktionen (Kopfprodukt, schwersiedendes Seitenprodukt, Sumpfprodukt) mit den folgenden Zusammensetzungen erhalten:
- Kopfprodukt:: ca. 99,5 bis 99,99 Gew.-% Wasser;
- Höhersiedendes Seitenprodukt:: eine etwa azeotrope Salpetersäure (ca. 63 bis 66 Gew.-% HNO₃); und
- Sumpfprodukt:: ca. 70 Gew.-% Ammoniumnitrat, ca. 19 Gew.-% Salpetersäure und ca. 11 Gew.-% Wasser.

Gibt man gemäß der vorliegenden Erfindung das im Sumpf der Kolonne K1 erhaltene Produkt zusätzlich auf eine Abtriebskolonne K2, werden bei dem Gesamtverfahren folgende Produktströme erhalten:
- Kopfprodukt K1:: ca. 99,5 bis 99,99 Gew.-% Wasser;
- Seitenprodukt K1 plus Kopfprodukt K2:: eine etwa azeotrope Salpetersäure (ca. 64 bis 66 Gew.-% HNO₃) sowie
- Sumpfprodukt K2:: ca. 81 Gew.-% Ammoniumnitrat, ca. 19 Gew.-% Wasser, Spurenanteile von Salpetersäure.

Wie zu erkennen ist, läßt sich der Salpetersäureanteil in der ausgeschleusten wäßrigen Salzlösung fast vollständig eliminieren. Wie ferner zu erkennen ist, führt das erfindungsgemäße Verfahren dazu, daß bei der Aufarbeitung einer salzhaltigen, wäßrigen Säurelösung der Salzanteil des Ausgangsprodukts in Form einer nicht fremdbelasteten Salzlösung erhalten wird.

Das im Beispiel anhand eines Salpetersäure und Amoniumnitrat enthaltenden Ausgangsprodukts erläuterte Verfahren kann unter fachmännischer Anpassung der entsprechenden Verfahrensparameter ohne grundsätzliche Probleme als Verfahren zur Trennung anderer ähnlicher technischer Stoffgemische ausgestaltet werden, wenn dabei eine konzentrierte Produktfraktion von einem der Bestandteile der Ausgangsmischung angestrebt wird und das im Gemisch enthaltene Salz in Form einer weitgehend von anderen Bestandteilen als Wasser befreiten Lösung erhalten und separat ausgeschleust werden soll.

Als Beispiele für derartige Ausgangsstoffgemische sind zu nennen: Gemische von Salpetersäure, Wasser und Ammoniumnitrat sowie gegebenenfalls weiteren Salzen und Mischungsbestandteilen, z. B. Nitroguanidin; Gemische von Wasser, Salzsäure und Salzen, insbesondere Chloriden, wie z.B. Calciumchlorid oder Ammoniumchlorid; Gemische von Wasser, Bromwasserstoffsäure und entsprechenden Bromiden; Gemische von Wasser, Fluorwasserstoffsäure und den entsprechenden Salzen; oder auch von organischen Säuren, wie Essigsäure oder Ameisensäure und Wasser mit ihren entsprechenden Salzen.

Auch bei derartigen Gemischen kann das erfindungsgemäße Verfahren unter entsprechender Anpassung der Verfahrensparameter mit Erfolg ökonomisch zur Anwendung kommen. Wenn dabei aufgrund der Bestandteile des Ausgangsgemischs der Salzanteil den eigentlichen oder einen wesentlichen Wertstoff darstellt, kann das Verfahren auch als Verfahren zur Entfernung von nicht-wäßrigen, jedoch wasserdampfflüchtigen Stoffen aus einer als eigentliches Produkt anzusehenden Restsalzlösung durchgeführt werden, und diese Art der Nutzung des erfindungsgemäßen Verfahrens ist als weitere Verwirklichung eines Verfahrens anzusehen, wie es durch die Ansprüche beschrieben wird.

## Patentansprüche

1. Verfahren zur Aufarbeitung einer wäßrigen, salzhaltigen Säurelösung, die wenigstens eine Säure enthält, die mit Wasser wenigstens ein Azeotrop bildet, unter Gewinnung einer salzfreien Säurelösung und einer Salzlösung mit vermindertem Säuregehalt, bei dem man die salzhaltige Säurelösung auf eine erste Kolonne (K1) aufgibt, in der die salzhaltige Säurelösung unter Gewinnung von Wasser als Kopfprodukt, eines höhersiedenden dampfförmigen Wasser-Säure-Gemischs sowie einer Sumpffraktion in Form einer aufkonzentrierten säurehaltigen Salzlösung aufgetrennt wird,
dadurch gekennzeichnet, daß man zur weiteren Abtrennung von Säure aus der aufkonzentrierten Salzlösung die Sumpffraktion aus der ersten Kolonne (K1) auf eine nachgeschaltete Abtriebskolonne (K2) aufgibt, in der die Sumpffraktion unter Energieeintrag aufgetrennt wird in (i) eine aus dem Kopfbereich der Abtriebskolonne (K2) dampfförmig abgezogene Säurefraktion und (ii) eine aus dem Sumpf der Abtriebskolonne als Flüssigkeit abgezogene vollständig oder weitgehend säurefreie konzentrierte Salzlösung.

2. Verfahren nach Anspruch 1, dadurch gekennzeichnet, daß der Energieeintrag in die Abtriebskolonne (K2) mittels eines in den Sumpf der Abtriebskolonne (K2) eingespeisten Strippdampfs und/oder durch indirekte Beheizung mittels eines im Sumpf der Abtriebskolonne angeordneten Heizers (W2) erfolgt.

3. Verfahren nach Anspruch 1 oder 2, dadurch gekennzeichnet, daß in die Abtriebskolonne (K2) seitlich und/oder am Kopf zusätzliches Wasser eingespeist wird, um eine Ausfällung des Salzes in der Abtriebskolonne (K2) und im Kolonnensumpf zu verhindern.

4. Verfahren nach einem der Ansprüche 1 bis 3, dadurch gekennzeichnet, daß die dampfförmig aus der Abtriebskolonne (K2) abgezogene Säurefraktion in die erste Kolonne (K1) an einer Stelle oberhalb des Seitenabzugs für das dampfförmige Wasser-Säure-Gemisch zurückgeführt wird.

5. Verfahren nach einem der Ansprüche 1 bis 3, dadurch gekennzeichnet, daß die dampfförmig aus der Abtriebskolonne (K2) abgezogene Säurefraktion kondensiert und aus dem Verfahren ausgeschleust wird.

6. Verfahren nach einem der Ansprüche 1 bis 5, dadurch gekennzeichnet, daß die Kolonne (K1) und die Abtriebskolonne (K2) bei gleichen oder unterschiedlichen Drücken im Bereich von 100 mbar bis 5 bar absolut betrieben werden.

7. Verfahren nach Anspruch 6, dadurch gekennzeichnet, daß sowohl die Kolonne (K1) als auch die Abtriebskolonne (K2) bei Normaldruck betrieben werden.

8. Verfahren nach einem der Ansprüche 1 bis 7, dadurch gekennzeichnet, daß der Energieeintrag in die Abtriebskolonne (K2) wenigstens teilweise über einen indirekt beheizten liegenden Verdampfer (W2) erfolgt, der in seinem Bodenbereich quer zur Fließrichtung der abfließenden Salzlösung Wehre aufweist, die ein kaskadenartiges Kammersystem von einzelnen Destillationsblasen bilden.

9. Verfahren nach einem der Ansprüche 1 bis 8, dadurch gekennzeichnet, daß die Salzlösung aus dem Sumpf der Abtriebskolonne (K2) wenigstens teilweise als Extraktionsmittel auf den Kopf oder in den oberen Kolonnenteil der Abtriebskolonne (K2) zurückgeführt wird.

10. Verfahren nach einem der Ansprüche 1 bis 9, dadurch gekennzeichnet, daß als Extraktionsmittel zusätzlich Salz auf den Kopf oder in den oberen Kolonnenteil der Abtriebskolonne (K2) zugespeist wird.

11. Anlage zur Duchführung eines Verfahrens nach einem der Ansprüche 1 bis 10, dadurch gekennzeichnet, daß der Anlagenteil zur Aufarbeitung der wäßrigen, salzhaltigen Säurelösung eine erste Kolonne (K1) und eine zweite, als Abtriebskolonne arbeitende Kolonne (K2) aufweist, wobei die erste und die zweite Kolonne als voneinander getrennte Kolonnen oder als Abschnitte einer einzigen unterteilten Kolonne vorliegen können, die Kolonne (K1) mindestens eine Zuleitung für die salzhaltige Säurelösung im mittleren Bereich der ersten Kolonne (K1) sowie mindestens eine Abzugsleitung für eine Wasserfraktion am Kopf der Kolonne (K1), mindestens eine Abzugsleitung für eine höhersiedende Fraktion in Form eines Säure/Wasser-Gemischs unterhalb der Aufgabestelle der salzhaltigen Säurelösung sowie eine Abzugsleitung für eine aufkonzentrierte säurehaltige Salzlösung aus dem Sumpf der ersten Kolonne (K1) aufweist, wobei die letztgenannte Abzugsleitung mit dem Kopfbereich einer zweiten, als Abtriebskolonne arbeitenden Kolonne (K2) verbunden ist, die wenigstens eine Abzugsleitung für ein dampfförmiges Wasser-Säure-Gemisch als Kopfprodukt und eine weitere Abzugsleitung für eine vollständig oder weitgehend säurefreie Salzlösung als Sumpfprodukt aufweist.

12. Anlage nach Anspruch 11, dadurch gekennzeichnet, daß die erste Kolonne (K1) sowie ggf. auch die zweite Kolonne (K2) mit einem im jeweiligen Kolonnensumpf angeordneten liegenden Verdampfer (W1; W2) versehen sind.

13. Anlage nach Anspruch 11 oder 12, dadurch gekennzeichnet, daß die zweite Kolonne (K2) zusätzlich mit Zuleitungen für eine seitliche Einspeisung von zusätzlichem Wasser und/oder eine Einleitung von Strippdampf in den Kolonnensumpf versehen ist.

14. Anlage nach einem der Ansprüche 11 bis 13, dadurch gekennzeichnet, daß der oder die liegende(n) Verdampfer (W1; W2) indirekt beheizt werden und in ihrem Bodenbereich quer zur Fließrichtung der jeweiligen abfließenden Salzlösung Wehre aufweisen, die ein kaskadenartiges Kammersystem von einzelnen Destillationsblasen bilden.
